# EUROPEAN PATENT APPLICATION

(11) **EP 1 459 880 A1**
(43) Date of publication of application: **22.09.2004**
(21) Application number: 04005794.5
(22) Date of filing: 11.03.2004
(51) Int. Cl.: B32B 5/26

(54) **Impregnated layered product usable as a soundproofing element in vehicles**

(30) Priority: 20.03.2003 IT PD20030058
(71) Applicant: O.R.V. OVATTIFICIO RESINATURA VALPADANA S.p.A., 35010 Grantorto (Padova) (IT)
(72) Inventor: Peruzzo, Maurizio, 36061 Bassano del Grappa (Vicenza) (IT)
(74) Representative: Modiano, Guido, Dr.-Ing.

(57) **Abstract**

An impregnated layered product usable as a soundproofing element in vehicles, comprising a layer (10) constituted by a load-bearing mat on which at least one layer of non-woven fabric (10), made of fibers of thermoplastic materials impregnated with resins selected among thermosetting resins and thermoplastic resins with the addition of crosslinking agents, is bonded so as to cover at least one side of the mat (11).

## Description

The present invention relates to an impregnated layered product usable as a soundproofing element in vehicles.

As it is known, preformed or flat layered products with thermal insulation and/or soundproofing functions are currently installed in motor vehicles.

These layered products are constituted by a variety of materials, whose type changes depending on the required performance, on the dimensions and on the regions where each component is fitted.

Some of these layered products, mainly for soundproofing uses, are self-supporting, rigid, and medium-large in size, and are fitted for example in roofs (roof panels).

They are usually sandwiches, an example of which is constituted in succession by:
-- a monolayer of low-weight non-woven fabric, composed of synthetic fibers and acting as a barrier and support (approximately 50 mg/m²)
-- at least one layer of glass fiber, deposited onto the non-woven fabric together with a bonding agent, which usually has a polyurethane base, in order to produce an assembly of all these components (approximately 100 g/m² of glass and approximately 50 g/m² of bonding agent)
-- a polyurethane mat (with a load-bearing function) that weighs approximately 200 g/m² and is approximately 1 cm thick, on both surfaces of which a thermosetting polyurethane bonding agent is applied in an amount approximately equal to 75 g/m² for each surface
-- at least one layer of glass fiber, like on the opposite side
-- a monolayer of non-woven fabric, like on the opposite side.

Finally, the resulting sandwich is placed in a mold, where thermoforming takes place (130 °C); the finished part weighs approximately 750 g/m².

The central mat of the sandwich can also be constituted by other materials, such as for example mixed textile fibers pretreated with powdered thermosetting resins.

In this case, the preforming temperature must reach 180 °C, while the weight of the mat rises to 700 g/m², bringing the weight of the finished part to 1250 g/m².

The main positive characteristics of these layered products are:
-- compliance with climatic chamber tests and flexural strength tests prescribed in this field
-- excellent reaction to fire
-- excellent rigidity
-- low weight
-- one-person fitting allowed thanks to its self-supporting ability and low weight
-- low costs, due both to weight reduction and to the fact that glass fiber is a low-cost raw material.

However, there are also drawbacks, which are due mainly to the presence of the glass fiber, such as:
-- bad environmental characteristics (during production and due to the fact that the glass fiber, over time and due to vibrations, tends to form microfibrils)
-- lack of recyclability
-- insufficient acoustic and thermal performance
-- increase in the percentage of rejects during fitting (due to the lack of elasticity, especially in large components).

The aim of the present invention is to provide an impregnated layered product that can be used as a soundproofing element in vehicles and eliminates the drawbacks noted above in known types.

Within this aim, an object of the invention is to provide a layered product that can be manufactured without particular technological complications with respect to known products.

Another object is to provide a layered product that can be manufactured by using current equipment.

This aim and these and other objects that will become better apparent hereinafter are achieved by a layered product usable as a soundproofing element in vehicles, comprising a layer constituted by a load-bearing mat, characterized in that it further comprises at least one layer of non-woven fabric made of fibers of thermoplastic materials impregnated with resins selected among thermosetting resins and thermoplastic resins with the addition of crosslinking agents, said layer being bonded so as to cover at least one side of said load-bearing mat.

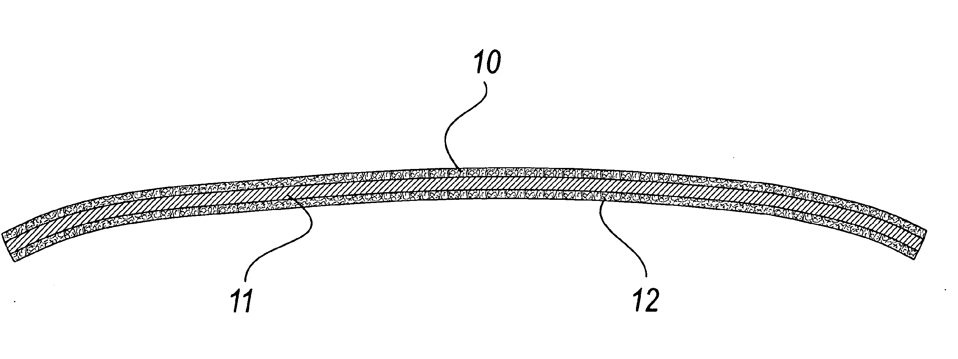

Further characteristics and advantages of the present invention will become better apparent from the following detailed description of a preferred but not exclusive embodiment thereof, illustrated by way of nonlimiting example in the accompanying drawing, wherein the only figure is a schematic sectional view of a layered product according to the invention.

With reference to the figure, a layered product according to the invention can be constituted by the following sandwich:
-- at least one layer 10 of non-woven fabric made of fibers of thermoplastic materials such as polyester, impregnated with resins selected among thermosetting resins, such as resols, thermoplastic resins, such as acrylic resins with the addition of crosslinking agents such as melamine resins and/or urea resins,
-- a load-bearing mat 11, which can be conveniently made of polyurethane weighing approximately 200 g/m² and approximately 1 cm thick, to which a thermosetting polyurethane bonding agent, corresponding to approximately 65 g/m² per side, has been applied to the surface to be coupled to said at least one layer 10,
-- at least one layer 12 of non-woven fabric, like on the opposite side.

For the layers 10 and 12, it is conveniently possible to use, for example, a non-woven pile fabric of polyester fibers, impregnated with 210 g/m² of resol, known commercially as "Valfeltro 198 FR Plus" and manufactured by the company O.R.V. Ovattificio Resinatura Valpadana in Grantorto (Padua).

The resulting sandwich is placed under a mold, where thermoforming is performed (130 °C).

The finished product weighs approximately 750 g/m².

For the layers 10 and 12, it is in any case possible to use advantageously all the resin-impregnated non-woven fabrics that are currently known per se for the manufacture of bituminous coatings in waterproofing work.

These non-woven fabrics are appreciated thanks to their high longitudinal tensile strength, low longitudinal tensile elongation, high resistance to temperatures, high tear resistance, low size shrinkage during application, installation and over time, high permeability, all of these characteristics making them ideal for bitumen treatment (an operation performed at approximately 180 °C).

With the particular application in co-molded soundproofing layered products for the car or automotive sector in general, these non-woven fabrics have also revealed additional performance aspects that they achieve with respect to known soundproofing layered products that use glass fiber:
-- improved environmental characteristics
-- sufficient acoustic and thermal performance
-- improved recyclability
-- good reaction to fire
-- low weight
-- good rigidity associated with sufficient elasticity
-- easier fitting (large roof panels can be fitted by a single person)
-- cost reduction (the cost of the layered products is comparable to that of glass fibers with accessories)
-- low percentage of rejects during fitting.

In practice it has been found that the present invention has achieved the intended aim and objects.

All the technical details may further be replaced with other technically equivalent elements.

The materials, so long as they are compatible with the contingent use, as well as the dimensions, may be any according to requirements. The disclosures in Italian Patent Application No. PD2003A000058 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A layered product usable as a soundproofing element in vehicles, comprising a layer constituted by a load-bearing mat (11), **characterized in that** it further comprises at least one layer (10) of non-woven fabric made of fibers of thermoplastic materials impregnated with resins selected among thermosetting resins and thermoplastic resins with the addition of crosslinking agents, said layer (10) being bonded so as to cover at least one side of said load-bearing mat (11).

2. The layered product according to claim 1, **characterized in that** said non-woven fabric is constituted by polyester fibers impregnated with resins selected among thermosetting resins such as resols, thermoplastic resins such as acrylic resins, with the addition of crosslinking agents such as melamine resins and/or urea resins.

3. The layered product according to claim 1, comprising a load-bearing mat (11) made of polyurethane, to which a thermosetting polyurethane bonding agent is applied on at least one side, **characterized in that** it comprises, so as to cover said at least one side of said mat (11), at least one layer (10, 12) of non-woven pile fabric made of polyester fibers and impregnated with resol.

4. The use of non-woven fabrics impregnated with resins, currently per se known for bituminous coatings, combined with load-bearing mats (11), for providing soundproofing layered products for vehicles.

5. The use according to claim 4, **characterized in that** said load-bearing mats are made of polyurethane.
